# EUROPEAN PATENT SPECIFICATION

(11) **EP 3 967 433 B1**
(45) Date of publication and mention of the grant of the patent: **10.01.2024**
(21) Application number: 21196160.2
(22) Date of filing: 10.09.2021
(51) Int. Cl.: B23D 55/02, B23D 55/06, B23B 13/02

(54) **SUPPORT ASSEMBLY AND KIT FOR ITS ASSEMBLY**
UNTERSTÜTZBAUGRUPPE UND SATZ FÜR IHRE MONTAGE
ENSEMBLE DE SUPPORT ET KIT POUR SON ASSEMBLAGE

(30) Priority: 11.09.2020 CA 3092814
(43) Date of publication of application: 16.03.2022
(73) Proprietor: Norwood Industries Inc., Oro-Medonte, Ontario L0L 1T0 (CA)
(72) Inventor: DALE, Ashlynne, Oro-Medonte (CA); CABRIT, Sebastien, Oro-Medonte (CA)
(74) Representative: Dowling, Ian

(56) References cited:
- EP-A1- 2 332 683
- DE-A1- 10 222 578
- US-A- 5 213 022
- US-A1- 2017 355 096

## Description

The present invention relates generally to a sawhead for a band saw for sawing lumber. In particular, the present invention relates to a support assembly for supporting a drive bandwheel, a free bandwheel, and a motor in a sawmill. The invention also relates to a kit for assembling such a support assembly.

A conventional band saw typically has a relatively large band saw blade, mounted in a sawhead along the path of travel of a log placed on a suitable moving bed with a drive mechanism for advancing the log against the blade. Alternatively, the log remains stationary and the sawhead is mounted on a carriage which is capable of transverse displacement along the log.

Typically, the band saw blade is entrained between two bandwheels which are driven by a motor. The motor is usually situated on the sawhead between the two bandwheels and may be protected by a cover. The maximum vertical distance between the motor, the sawhead, and the cover to the band saw blade is often called the "throat clearance" or "throat capacity". The throat clearance dictates the maximum depth of cut that can be accommodated by the blade relative to the top surface of the log, i.e. it limits the maximum thickness of lumber that can be cut.

In order to increase the throat clearance, existing sawheads have been modified by using a combination of welded and machined metal parts in order to lower the bandwheels below the sawhead. Lowering the bandwheels results in a lower band saw blade relative to the sawhead and increases the distance between the band saw blade to the motor, the sawhead and the cover, thereby increasing the throat clearance.

Lowering the bandwheels requires complex and costly fixturing, welding, and gusseting of sawhead structures. Such fixturing results in a decrease in rigidity. There is thus a need for an improved portable sawmill having a greater throat clearance while maintaining rigidity.

During milling, the band blade spins around the bandwheels at very high velocity and under high tension. Obviously the blade has to be under high tension or it would not cut. Remaining on track is difficult. Even a small misalignment in the bandwheels will cause the blade to crawl or fly off the bandwheels.

However, when tension is applied to the saw blade, the structure wants to flex - flex can happen in the bandwheel axles, in the interface between the axles and the sawhead, or in the sawhead itself. So the structure in aggregate must resist deformation/torsion otherwise the alignment of the bandwheels will be compromised and the blade will not run true anymore.

There are sawmills that offer a deep throat, but to do that, they need to "drop" the bandwheels relative to the engine/clutch and, to do that, they need elaborate weldments with multiple sub-assemblies, much gusseting, heavy plate metal and complex welds that must be very precisely fixtured to allow the distance but also deny torsion and so preserve perfect alignment. That type of sawhead is expensive and time-consuming not only to make but to quality check. To ensure proper bandsaw tracking on bandwheels, the distance from each bandwheel, and the alignment of each bandwheel and the saw blade, the bandwheels must remain absolutely fixed in their predetermined locations. In addition, the bandsaw blade is under high pressure during operation, thereby requiring that the sawhead structure must be highly rigid to resist deflection and torsion.

DE 102 22 578 A1 discloses a band saw having a passage-width adjusting device which comprises a telescopic guide having a telescopic arm element which is fixed relative to a band saw wheel and a movable telescopic arm element which can be moved out of and into the fixed telescopic arm element and on which the other band saw wheel is held, so that the available passage width of the band saw can be varied by adjusting the movable telescopic arm element. FIGS. 1 to 6 of DE 102 22 578 A1 show a band saw head 1 with a U-shaped portal 2, a vertical carriage mounted on the portal 2 and movable vertically, and band saw wheels 4, 5, around which a circulating saw blade 6 is guided. The upper part of the saw blade 6 and the band saw wheels 4, 5 are coverable by means of a protective cover 7. The band saw wheels 4, 5 are driven by means of an electric motor 9. The telescopic guide 3 has a stationary telescopic arm element 10 with a horizontal tube element 11, which is rectangular in cross section, and a movable telescopic arm element 12 with a horizontal tube element 13, which can be guided displaceably within the tube element 11 and can be moved telescopically out of and into the latter. The outer-side end of the tube element 13 is adjoined by a profile carrier 14 which drops obliquely downward and at the end of which the band saw wheel 5 is rotatably mounted. In the same way, the stationary tubular element 11 is adjoined by an outwardly sloping profiled support 15 at the end of which the band saw wheel 4 is rotatably mounted. The two profiled supports 14, 15 have a fork-shaped structure and extend on both sides of the band saw wheels 4, 5 as far as their hub region. The stationary telescopic arm element 10 is fastened to the carriage which is mounted in a vertically displaceable manner on the vertical posts of the portal 2. The movable telescopic arm element 12, on the other hand, is displaceably received in the stationary tubular element 11 and is designed as a freely projecting cantilever. In order to change the distance between the two band saw wheels 4, 5, the movable telescopic arm element 12 is telescopically extendable out of the tubular element and retractable into the tubular element by means of a double-acting hydraulic cylinder 16.

The present invention provides a support assembly for retaining a motor relative to a drive bandwheel and a free bandwheel in a sawmill, the support assembly comprising: a first platform orientated on a first plane, the first platform securable to an axle of the drive bandwheel; a second platform orientated on a second plane, the second platform securable to an axle of the free bandwheel; and a centre platform coupled to, and between, the first and second platforms, the centre platform orientated on a third plane vertically spaced apart from the first and second planes, the centre platform configured to support the motor above the axles of the drive bandwheel and the free bandwheel.

Optionally, the first plane and the second plane are coplanar, and the third plane is parallel with the first and second planes.

The support assembly further comprises a pair of joints, one joint connecting the first platform with one end of the centre platform, and the other joint connecting the second platform with another end of the centre platform.

The first, second, and centre platforms, and the pair of joints collectively comprise: a first structural member; a second structural member; and spacer components securing the first and second structural members together, spaced apart from one another.

Each structural member comprises: a first segment; a second segment; a centre segment positioned between the first and second segments; and a joint segment connecting the first segment with one end of the centre segment, and another joint segment connecting the second segment with another end of the centre segment, the joint segments collectively forming the joints.

Optionally, the first structural member further comprises a drive axle aperture positioned in the first segment for receiving the axle of the drive bandwheel therethrough.

Optionally, the second structural member further comprises another drive axle aperture positioned in the first segment for receiving the axle of the drive bandwheel therethrough, and a free axle aperture positioned in the second segment for receiving the axle of the free bandwheel therethrough.

Optionally, each structural member is cast as a single unit.

The spacer components comprise: a centre plate secured to, and extending between, the centre segments of the structural members, the centre plate and the centre segments forming the centre platform.

Optionally, the spacer components further comprise: a first upper plate secured to, and extending between, the first segments of the structural members, the first upper plate and the first segments forming the first platform; and a second upper plate secured to, and extending between, the second segments of the structural members, the second upper plate and the second segments forming the second platform.

Optionally, the first platform further comprises a first lower plate secured to the first upper plate around the first segments of the structural members, and the second platform further comprises a second lower plate secured to the second upper plate around the second segments of the structural members.

Optionally, the support assembly further comprises a brace extending between each of the joint segments of the structural members.

Optionally, the structural members are U beams.

The invention also teaches a sawhead for use in a sawmill, the sawhead comprising: the support assembly described above, in accordance with any of the embodiments described herein; a motor supported by the centre platform of the support assembly; a drive bandwheel with a drive axle secured to the first platform of the support assembly, the drive bandwheel operatively coupled to the motor; a free bandwheel with a free axle secured to the second platform of the support assembly, the free bandwheel operatively coupled to the drive bandwheel via a blade; wherein elevation of the centre platform above the axles enlarges a throat clearance between the blade and the centre platform.

Optionally, the drive axle extends through the drive axle apertures in the first and second structural members, and the free axle extends through the free axle aperture in the second structural member.

Optionally, the sawhead further comprises a guard secured between the support assembly and the drive and free bandwheels, the guard comprising: a drive section positioned adjacent the drive bandwheel, a free section positioned adjacent the free bandwheel, and a neck section connecting the drive section and the free section, the neck section extending above the centre platform of the support assembly.

Optionally, the drive axle is secured to the drive section such that the drive bandwheel is fully contained within the drive section of the guard, and the free axle is secured to the free section such that the free bandwheel is fully contained within the free section of the guard.

Optionally, the first structural member of the support assembly is positioned adjacent the guard.

There is also provided a kit for assembling said support assembly for use in a sawmill, the kit comprising: a first structural member and a second structural member, each structural member comprising: a first segment orientated on a first plane, a second segment orientated on a second plane, a centre segment orientated on a third plane that is vertically spaced apart from the first and second planes, and a joint segment connecting the first segment with one end of the centre segment, and another joint segment connecting the second segment with another end of the centre segment; and spacer components for securing the first and second structural members together, spaced apart from one another.

Optionally, each structural member is cast as a single unit.

Optionally, the first plane and the second plane are coplanar, and the third plane is parallel with the first and second planes.

The spacer components comprise: a centre plate securable to and between the centre segments of the first and second structural members.

Optionally, the spacer components comprise: a first upper plate securable to and between the first segments of the first and second structural members; and a second upper plate securable to and between the second segments of the first and second structural members.

Optionally, the spacer components comprise: a first lower plate securable to the first upper plate around the first segments of the first and second structural members; and a second lower plate securable to the second upper plate around the second segments of the structural members.

Optionally, the kit further comprises a brace securable between each of the joint segments of the first and second structural members.

The invention also teaches a sawmill comprising: the sawhead described above, in accordance with any of the embodiments described herein; a log bed defining a first translation axis; a carriage mounted to the bed for movement along the first translation axis and defining a second translation axis and a lateral axis, the second translation axis being orientated transverse to the first translation axis and the lateral axis being orientated transverse to each of the first translation axis and the second translation axis; two or more elongate guide members secured to the carriage for movement therewith along the first translation axis, the guide members each being orientated parallel to the second translation axis and being spaced apart from one another in the direction of the lateral axis; and the sawhead comprising two or more guide receivers, each guide receiver being mounted to a respective one of the guide members.

The invention will now be further described, by way of example only, with reference to the accompanying drawings in which:
Figure 1 is an upper, front perspective view of a support assembly according to an embodiment of the present invention.
Figure 2 is an upper, rear perspective view of the support assembly of Figure 1.
Figure 3 is a rear elevational view of the support assembly of Figure 1.
Figure 4 is front elevational view of the support assembly of Figure 1.
Figure 5 is a right side view of the support assembly of Figure 1.
Figure 6 is a left side view of the support assembly of Figure 1.
Figure 7 is a plan view of the support assembly of Figure 1.
Figure 8 is an exploded rear perspective view of the support assembly of Figure 1.
Figure 9 is a rear perspective view of structural members of Figure 8 in isolation.
Figure 10 is a rear perspective view of a sawhead with the support assembly of Figure 1 incorporated therein.
Figure 11 is a rear elevational view of the sawhead of Figure 10.
Figure 12 is a front perspective view of the sawhead of Figure 10.
Figure 13 is a front elevational view of the sawhead of Figure 10.
Figure 14 is a right side view of the sawhead of Figure 10.
Figure 15 is a left side view of the sawhead of Figure 10.
Figure 16 is a plan view of the sawhead of Figure 10.
Figure 17 is a bottom elevational view of the sawhead of Figure 10.
Figure 18 is a partially exploded rear perspective view of the sawhead of Figure 10.
Figure 19 is a rear perspective view of the sawhead of Figure 10 mounted on a carriage.
Figure 20 is a front, left perspective view of the sawhead and the carriage of Figure 19.
Figure 21 is a rear perspective view of the sawhead and carriage of Figure 19 incorporated in a sawmill.
Figure 22 is a rear elevational view of the sawmill of Figure 21.
Figure 23 is a front, left perspective view of the sawmill of Figure 21.
Figure 24 is a front elevational view of the sawmill of Figure 21.

As illustrated in the Figures, the present invention provides a support assembly 10 for retaining a motor 72 relative to a drive bandwheel 74 and a free bandwheel 76 in a sawmill 100.

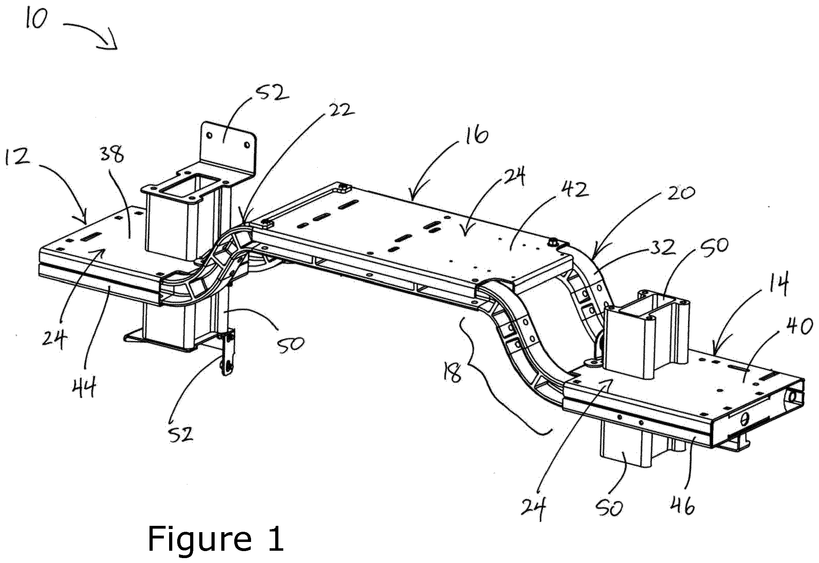

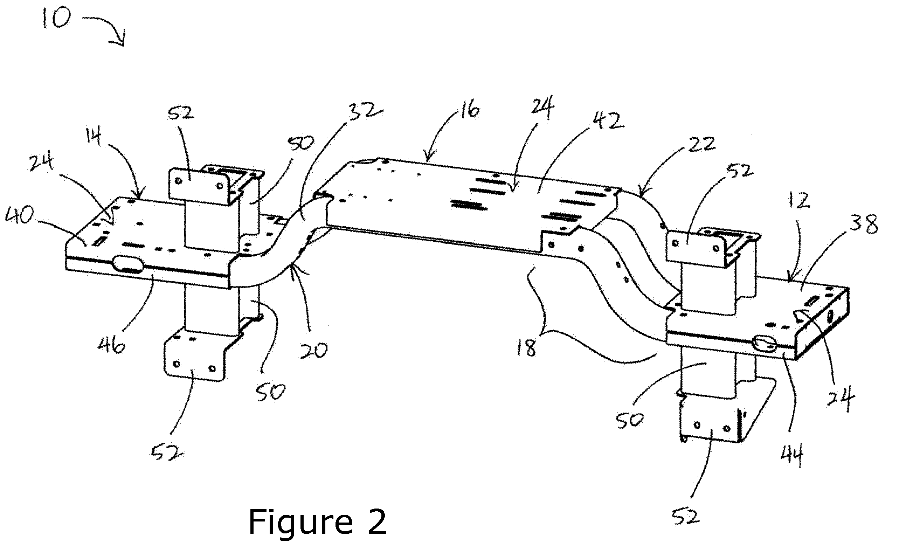

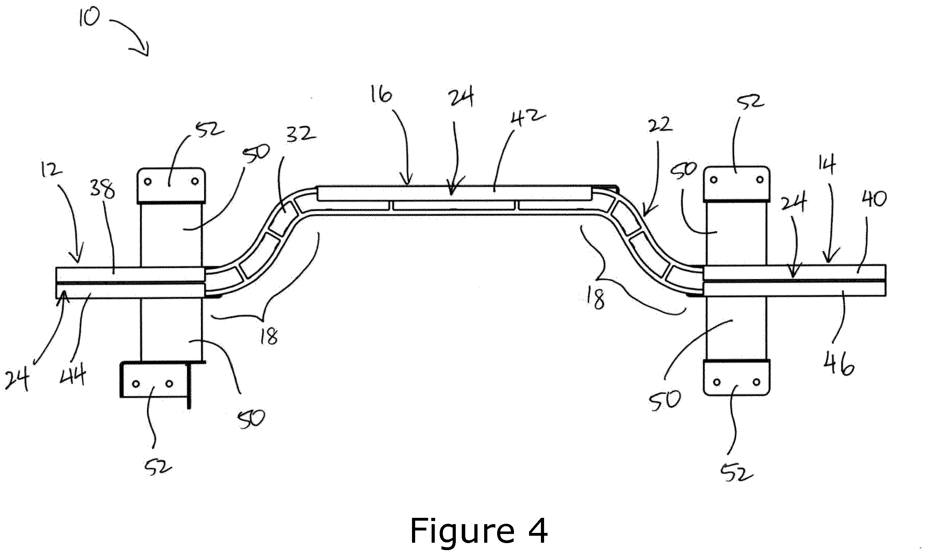

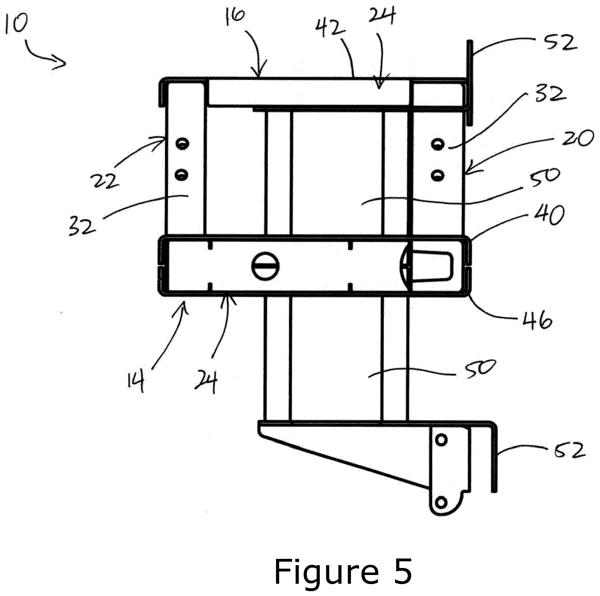

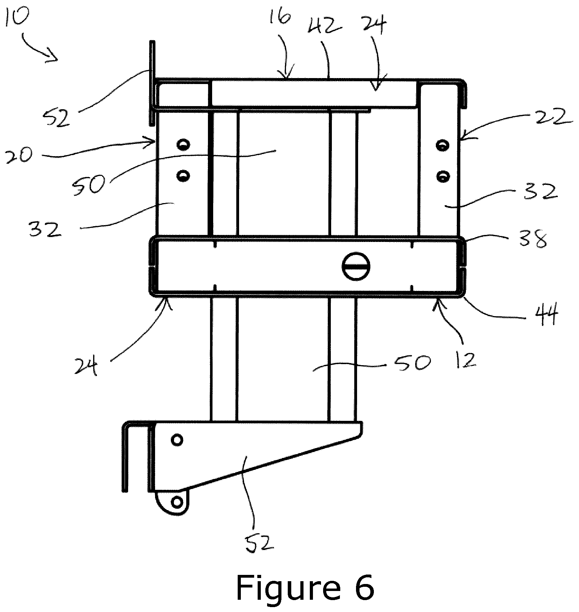

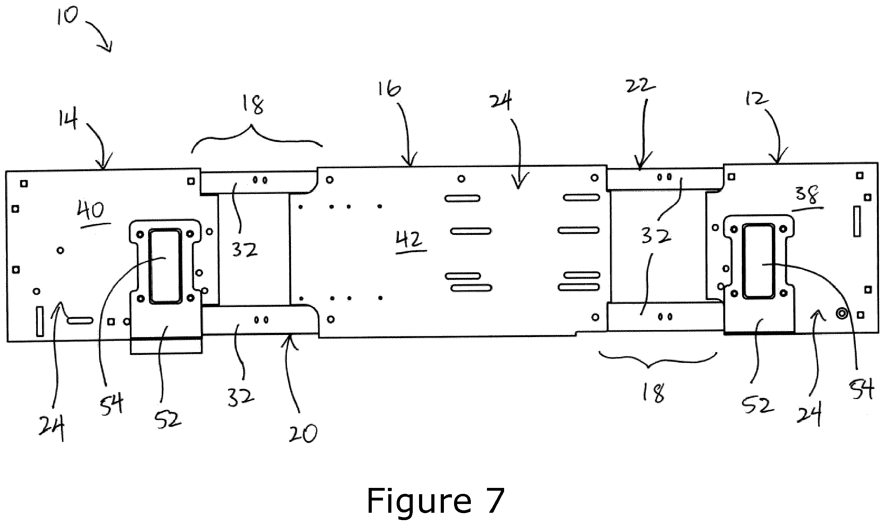

Figures 1-9 illustrate an embodiment of support assembly 10. In that regard, support assembly 10 generally includes a first platform 12, a second platform 14, and a centre platform 16 coupled to, and between, first and second platforms 12, 14.

First platform 12 is orientated on a first plane and is securable to an axle of the drive bandwheel. Second platform 14 is orientated on a second plane, which can be the same as the first plane, and is securable to an axle of the free bandwheel. Centre platform 16 is orientated on a third plane that is spaced apart from the first and second planes.

Centre platform 16 is configured to elevate and support the motor. Thus, the third plane on which the motor is supported is offset, or vertically spaced apart, from the first and second planes in which the axles of the drive bandwheel and the free bandwheel are situated. In this manner, in use, centre platform 16 retains the motor above the axles of the drive bandwheel and the free bandwheel, as will be discussed in further detail below.

Returning to the present embodiment, the first plane is aligned, or coplanar, with the second plane, and the third plane is orientated parallel with the first and second planes. In alternate applications, first platform 12 may be offset from second platform 14. In yet other applications, first, second, and third platforms 12, 14, 16 may be orientated at an angle relative to one another, i.e. non-parallel.

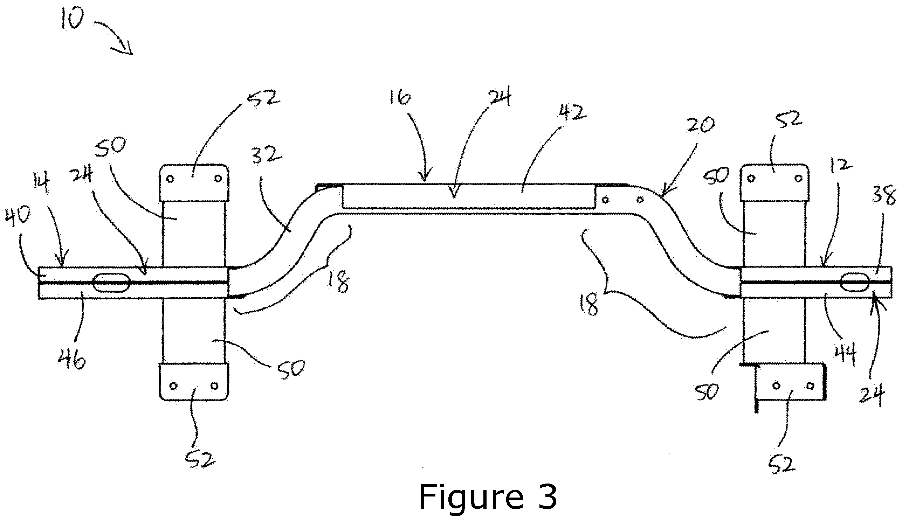

As seen in Figure 3, support assembly 10 further includes a pair of joints 18, with one joint 18 connecting first platform 12 with one end of centre platform 16, and the other joint 18 connecting second platform 14 with an opposed end of centre platform 18. While the depicted joints 18 are shown to be smooth, curved portions of support assembly 10, in other cases, joints 18 may be angular and/or have a linear configuration.

First, second, and third platforms 12, 14, 16 and joints 18 may collectively be a single, formed unit, or may comprise modular units that are securable together to form support assembly 10.

Alternately, the depicted embodiment illustrates first, second, and centre platforms 12, 14, 16, and joints 18 collectively comprising a first structural member 20, a second structural member 22, and spacer components 24. Spacer components 24 secure first and second structural members 20, 22 together, but spaced apart from one another. As shown, first and second structural members 20, 22 are secured parallel to one another. In some applications, first and second structural members 20, 22 may be tubular or have an I-beam or U-beam cross-section.

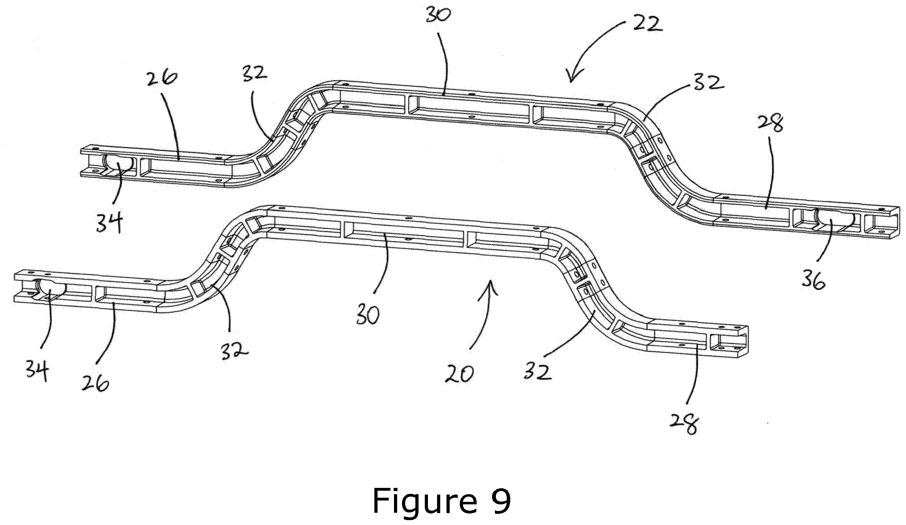

As best seen in Figure 9, first and second structural members 20, 22 each have a first segment 26, a second segment 28, a centre segment 30, and a pair of joint segments 32. One joint segment 32 connects first segment 26 with one end of centre segment 30, and the other joint segment 32 connects second segment 28 with another end of centre segment 30. First segment 26, second segment 28, and centre segment 30 are shown to be linear, while joint segments 32 are shown to be curved. While the depicted joint segments 32 are shown to be smooth and curved, in other cases, joint segments 32 may be angular and/or have a linear configuration.

In use, joint segments 32 connecting first segments 26 with centre segments 30 of both first and second structural members 20, 22 collectively form one joint 18, while joint segments 32 connecting second segments 28 with centre segments 30 of both first and second structural members 20, 22 collectively form another joint 18.

The segments may be separate components that are secured or welded together. However, in the present preferred embodiment, first, second, centre, and joint segments of each structural member 20, 22 are formed and created as a single unit. This is preferred as it requires no welding or other fastening. In that manner, for example, each structural member 20, 22 may be cast in iron or aluminum. In other applications, structural members 20, 22 may be cast or molded in different metals, alloys, or materials. Structural member 20, 22, each cast as a single unit, helps to provide rigidity to support assembly 10. As cast parts, multiple structural member may also be created consistently and accurately.

As also shown in Figure 9, first structural member 20 further includes a drive axle aperture 34 positioned in first segment 26 for receiving the axle of the drive bandwheel therethrough. Drive axle aperture 34 is shown located proximate the distal end of first segment 26 of first structural member 20. Alternately, drive axle aperture 34 may instead be located at a different position along first segment 26.

Second structural member 22 also includes a drive axle aperture 34 positioned in first segment 26 for receiving the axle of the drive bandwheel therethrough. Unlike first structural member 20, however, second structural member 22 also includes a free axle aperture 36 positioned in its second segment 28 for receiving the axle of the free bandwheel therethrough. Drive axle aperture 34 and free axle aperture 36 are shown located proximate the respective distal ends of first and second segments 26, 28 of second structural member 22. Alternately, drive axle aperture 34 and free axle aperture 36 may instead be located at different positions along first and second segments 26, 28 respectively, so long as drive axle apertures 34 in first and second structural members 20, 22 are aligned to receive the axle of the drive bandwheel therethrough.

Turning to spacer components 24, they include a first upper plate 38, a second upper plate 40 and a centre plate 42. First upper plate 38 is secured to, and extends between, first segments 26 of structural members 20, 22 orientated along the first plane. Second upper plate 40 is secured to, and extends between, second segments 28 of structural members 20, 22 orientated along the second plane. Centre plate 42 is secured to, and extends between, centre segments 30 of structural members 20, 22 orientated along the third plane.

In that manner, first upper plate 38 and first segments 26 collectively form first platform 12, second upper plate 40 and second segments 28 collectively form second platform 14, and centre plate 42 and centre segments 30 collectively form centre platform 16.

Since the first and second planes of the present embodiment are coplanar, first upper plate 38 and second upper plate 40 are generally orientated coplanar with one another. As well, since the third plane of the present embodiment is parallel with the first and second planes, centre plate 42 is orientated parallel with, but spaced apart from, first upper plate 38 and second upper plate 40.

First platform 12 is depicted to further include a first lower plate 44 that is secured to first upper plate 38 around first segments 26 of structural members 20, 22. Second platform is also depicted to further include a second lower plate 46 secured to second upper plate 40 around second segments 28 of structural members 20, 22. In both cases, first lower plate 44 and second lower plate 46 are orientated parallel, respectively, with first upper plate 38 and second upper plate 40 to form plate stacks. Though not shown in the Figures, centre platform 16 may also include a lower centre plate.

For additional structural rigidity, support assembly 10 is shown to further include a pair of braces 48 extending between corresponding joint segments 32 of first and second structural members 20, 22. Braces 48 are rigid components that may be welded or secured to joint segments 32 with fasteners. In other applications, braces 48 may be additionally or alternately secured to first, second, and/or centre segments 26, 28, 30 with fasteners.

First and second platforms 12, 14 each include guide openings 54 situated in their respective first and second upper plates 38, 40, and the corresponding first and second lower plates 44, 46.

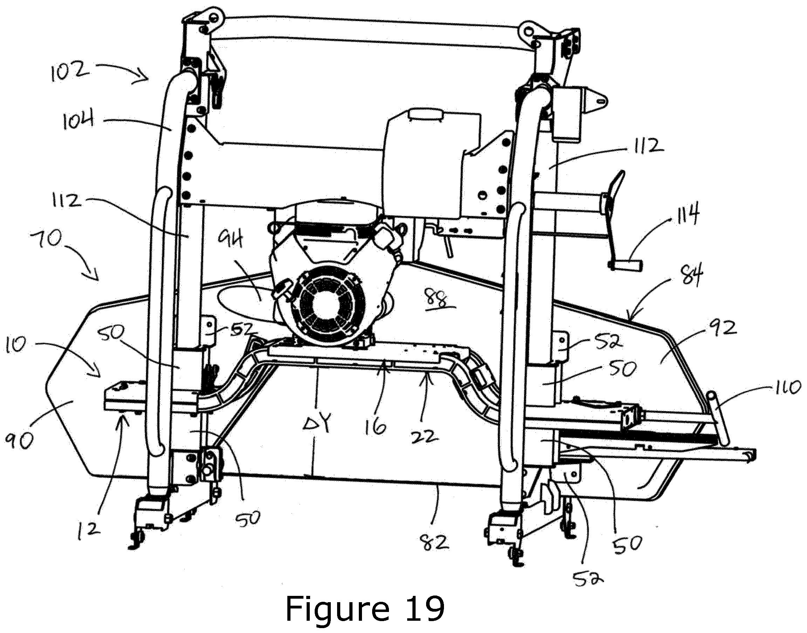

Accordingly, support assembly 10 may further include guide receivers 50 and brackets 52 positioned about guide openings 54. As shown in the Figures, guide receivers 50 are hollow column sections fastened to both sides of both first and second platforms 12, 14, whose openings are aligned with guide openings 54. Specifically, one guide receiver 50 is fastened to each of first upper plate 38, first lower plate 44, second upper plate 40, and second lower plate 46. Each pair of guide receivers 50 secured to first and second platforms 12, 14 are aligned together with their corresponding guide opening 54 and dimensioned to receive upright guide members 112 of a sawmill therethrough, as shown in Figure 19.

To each guide receiver 50 is further fastened a bracket 52. Each bracket 52 is configured to be securable to a sawhead. In this manner, brackets 52 allow support assembly 10 to be secured to the sawhead of a sawmill.

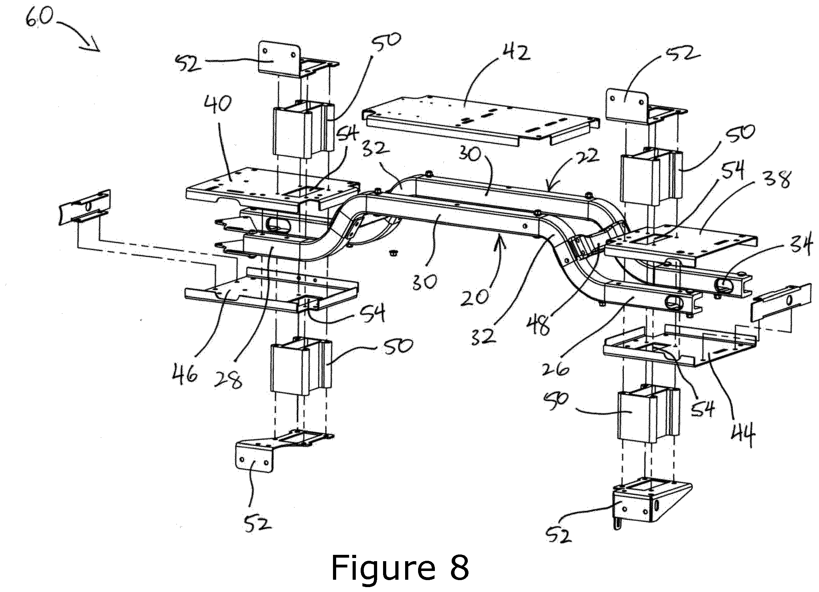

For ease of transportation, support assembly 10 may be provided in a kit 60 form, see Figures 8 and 9, for a user to assemble on their own. In such a case, the kit may include a first structural member and a second structural member, where each structural member has a first segment on a first plane, a second segment on a second plane, a centre segment on a third plane that is vertically spaced apart from the first and second planes, and a pair of joints connecting the first segment with one end of the centre segment, and connecting the second segment with another end of the centre segment. The kit would also include spacer components for securing the first and second structural members together, but spaced apart from one another.

In some applications, the first second, and centre segments, along with the joints, of each structural member are cast as a single unit. The first plane and the second plane of the first and second structural members may be coplanar, and the third plane may be parallel with the first and second planes.

The spacer components of the kit include a centre plate that is securable between the centre segments of the first and second structural members with fasteners, a first upper plate that is securable between the first segments of the first and second structural members with fasteners, and a second upper plate that is securable between the second segments of the first and second structural members with fasteners.

The spacer components may further include a first lower plate that is securable to the first upper plate around the first segments of the first and second structural members with fasteners, a second lower plate that is securable to the second upper plate around the second segments of the structural members with fasteners.

The kit may further comprise a pair of braces that are securable between the joints of the first and second structural members, and may comprise guide receivers and brackets for securing to the first and second upper and lower plates.

In the present embodiment, kit 60 includes first and second structural members 20, 22 and spacer components 24 as described above. Spacer components 24 comprise centre plate 42, first upper plate 38, second upper plate 40, first lower plate 44, and second lower plate 46. Kit 60 is shown to also include braces 48, guide receivers 50, and brackets 52.

All the parts of kit 60 may be secured together with fasteners. No welding is required. Thus, assembling support assembly 10 from kit 60 tends to be simpler and faster than the complicated welding necessary to modify existing sawheads to increase the throat clearance.

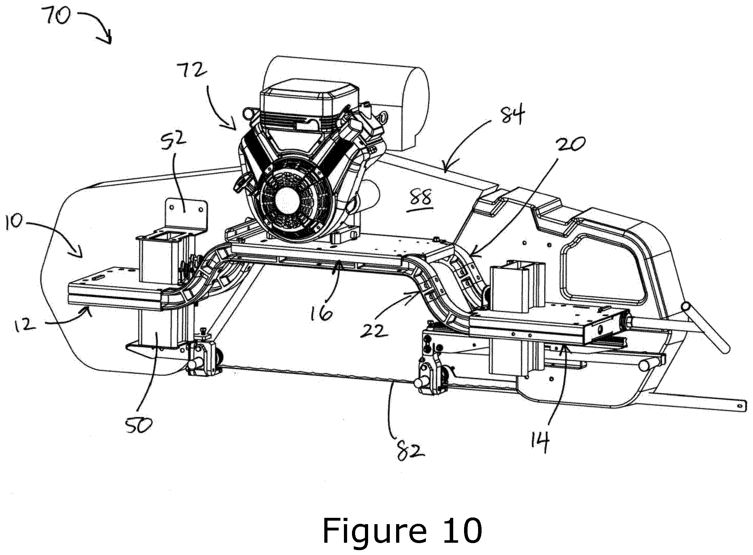

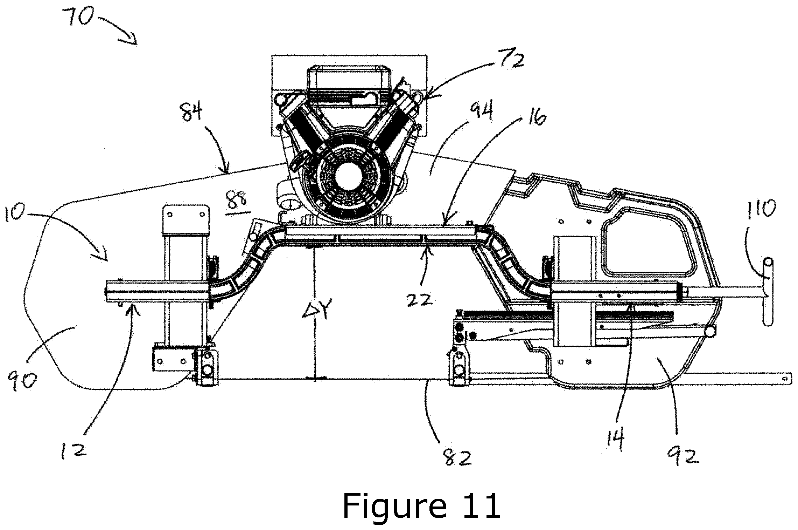

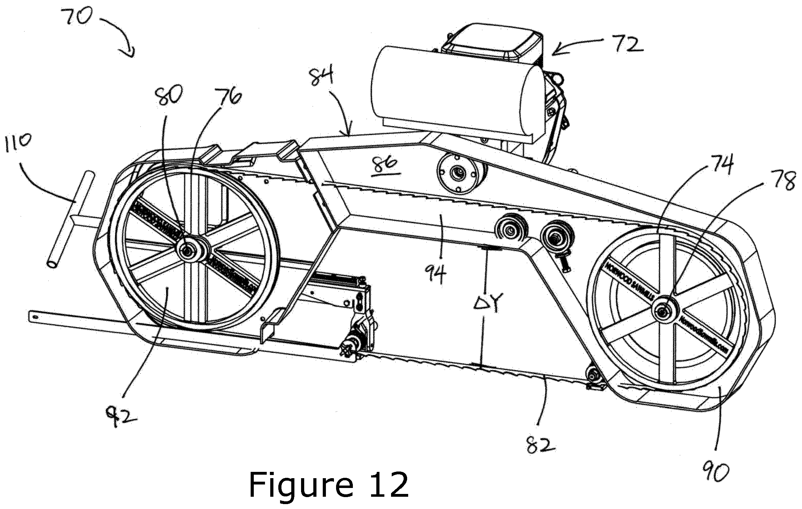

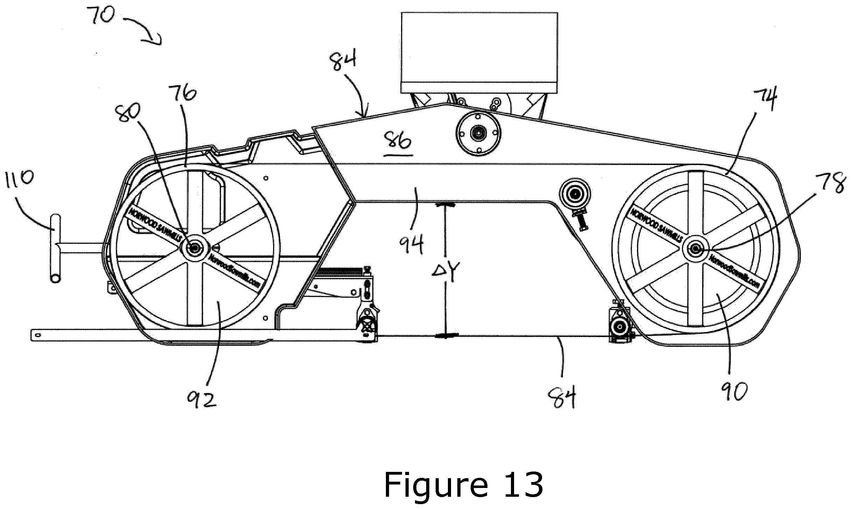

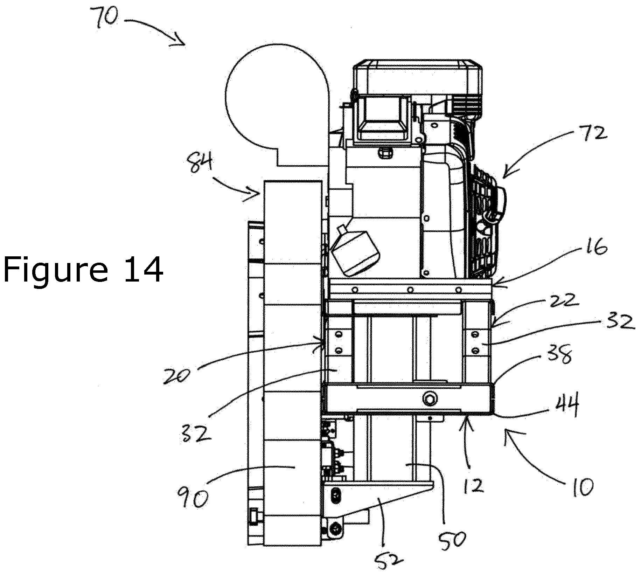

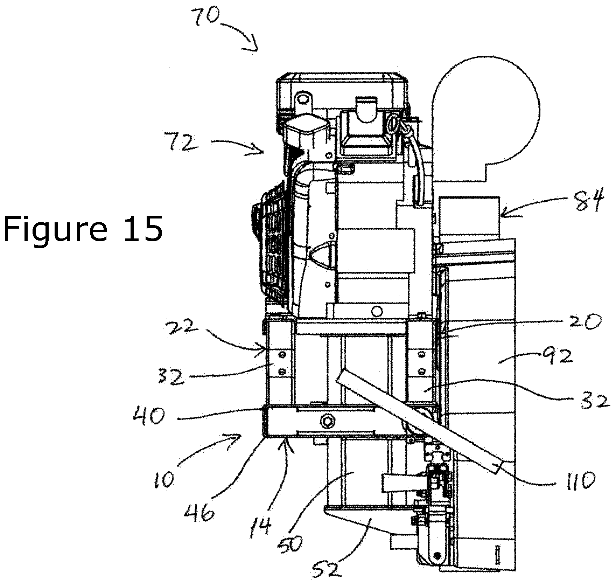

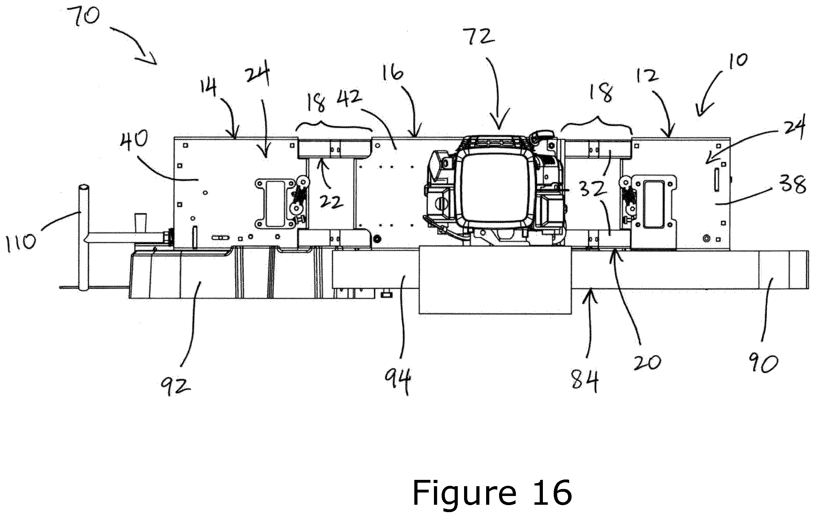

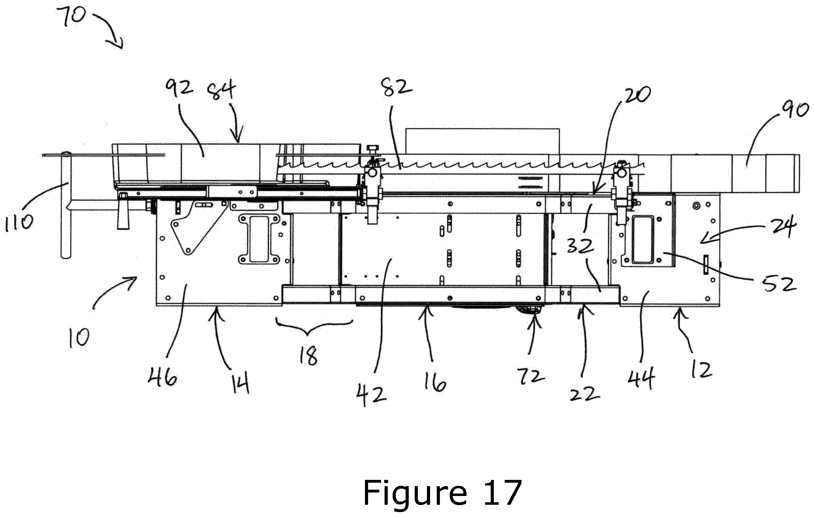

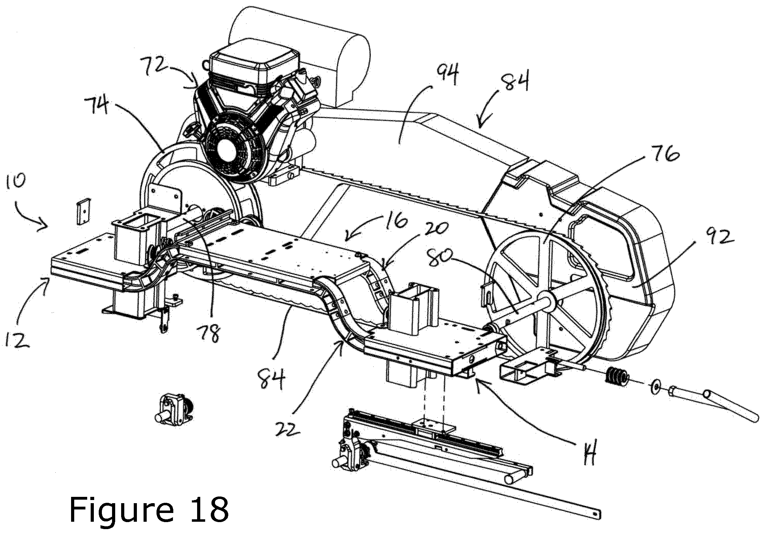

Turning to Figures 10-18, there is shown a sawhead 70 with support assembly 10 incorporated therein. Sawhead 70 also includes motor 72, drive bandwheel 74 with a drive axle 78, and free bandwheel 76 with a free axle 80.

Motor 72 is situated on, and supported by, centre platform 16 of support assembly 10. Drive bandwheel 74 is operatively coupled to, and actuated by, motor 72. Free bandwheel 76 is, in turn, operatively coupled to drive bandwheel 74 via a blade 82. Drive axle 78 of drive bandwheel 74 is secured to first platform 12, and free axle 80 is secured to second platform 14 of support assembly 10.

In the present embodiment, drive axle 78 is secured to first platform 12 by extending through drive axle apertures 34 in both first and second structural members 20, 22, and being fixed therein. Free axle 80 is secured to second platform 14 by extending through free axle apertures 36 in first structural member 20, and being fixed therein.

Since the third plane of centre platform 16 is vertically spaced apart from the planes of first and second platforms 12, 14, elevation of centre platform 16 above drive and free axles 78, 80 enlarges the throat clearance (ΔY) between blade 82 and centre platform 16. In such a manner, the throat clearance (ΔY) achieved by sawhead 70 is larger than the throat clearance that would result with a support assembly where the first, second, and centre platforms are all coplanar.

Sawhead 70 also includes a guard 84, with a front face 86 and a back face 88, positioned between support assembly 10 and motor 72, drive bandwheel 74, and free bandwheel 76. In particular, support assembly 10 is situated adjacent back face 88, and motor 72, drive bandwheel 74, and free bandwheel 76 are situated adjacent front face 86. In the shown embodiment, first structural member 20 is positioned against back face 88 of guard 84, and brackets 52 are secured thereto with fasteners.

Guard 84 is shown to have a drive section 90 for covering drive bandwheel 74, a free section 92 for covering free bandwheel, and a neck section 94 connecting drive section 90 and free section 92. When used with support assembly 10, neck section 94 extends above, and not below, centre platform 16, in order not to impede the throat clearance (ΔY) between blade 82 and centre platform 16.

To secure drive axle 78 to first platform 12, drive axle 78 extends through drive section 90, and then through drive axle apertures34 in both first and second structural members 20, 22. To secure free axle 80 to second platform 14, free axle 80 extends through free section 92, and then through free axle aperture 36 in first structural member 20.

As shown, drive axle 78 is secured to drive section 90 such that drive bandwheel 74 is fully contained within drive section 90, and free axle 80 is secured to free section 92 such that free bandwheel 76 is fully contained within free section 92 of guard 84.

Unlike conventional modified sawheads that lower the bandwheels below the sawhead to increase the throat clearance, the present invention allows both drive bandwheel 74 and free bandwheel 76 to be fully contained within sawhead 70 while still increasing the throat clearance. This provides for better safety for the user and better protection for the bandwheels.

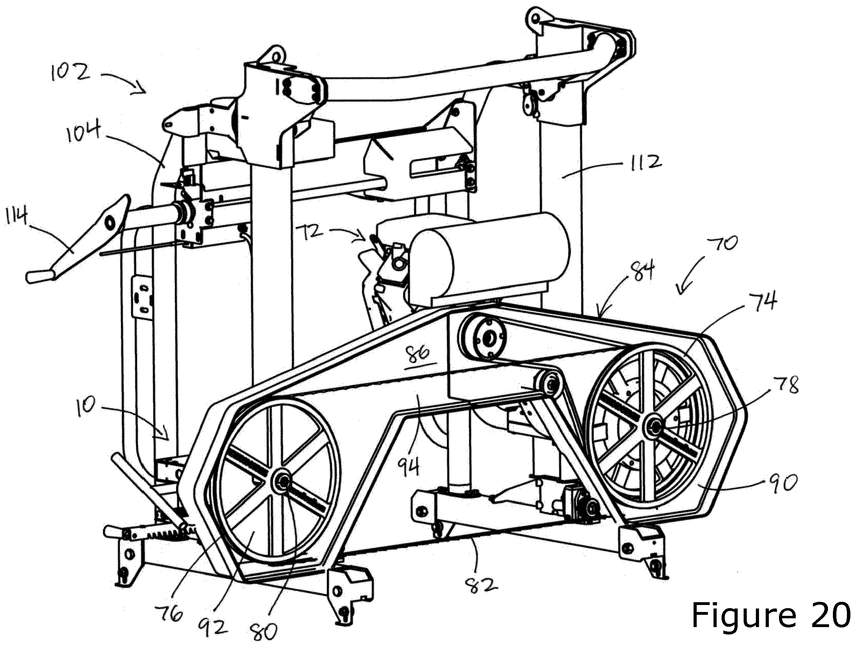

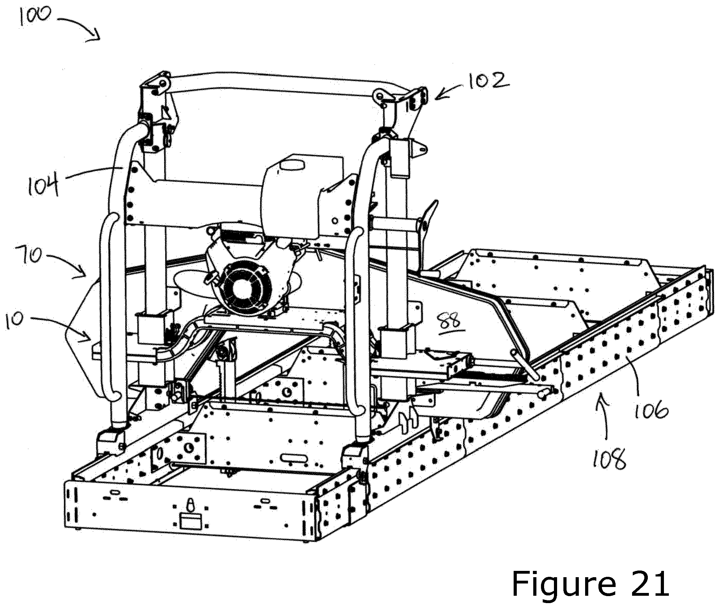

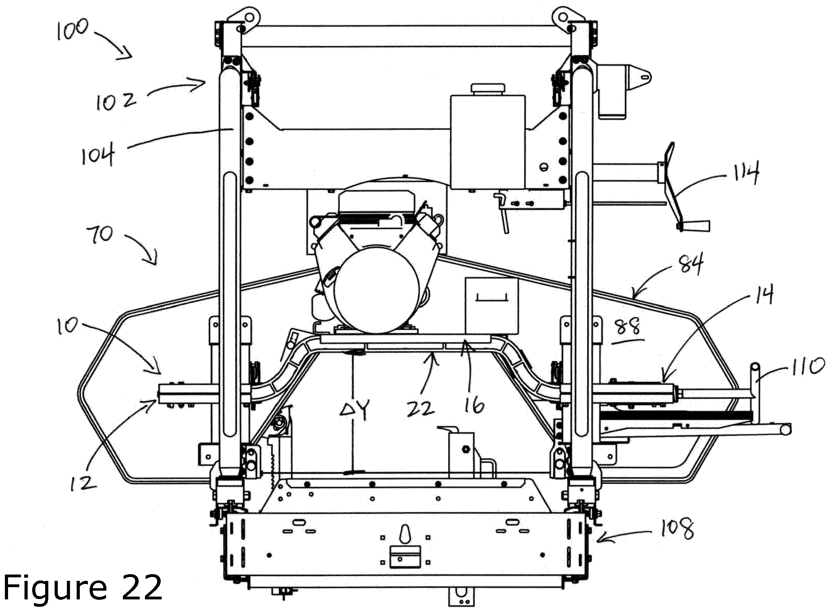

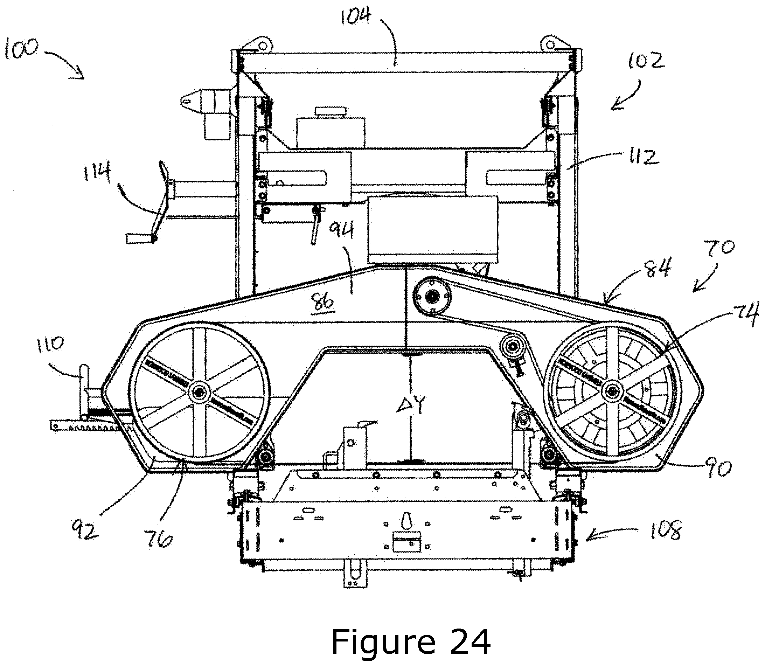

Figures 19-24 illustrate sawhead 70 secured to a carriage 102 and incorporated into sawmill 100. As noted above, sawhead 70 may be mounted along the path of travel of a log placed on a suitable moving bed with a mechanism for advancing the log relative to the blade.

Alternatively, as shown in the depicted embodiment, sawhead 70 is designed to be used as part of sawmill 100. Sawhead 70 is fitted to carriage 102 which is capable of longitudinal displacement on rails 106 of sawmill base 108. Tension on blade 82 is controlled by sawhead tension T handle 110. As well, sawhead 70 can be moved vertically along guide members 112 by operation of crank 114. As described above, guide members 112 extend through support assembly 10 by means of guide receivers 50 and guide openings 54.

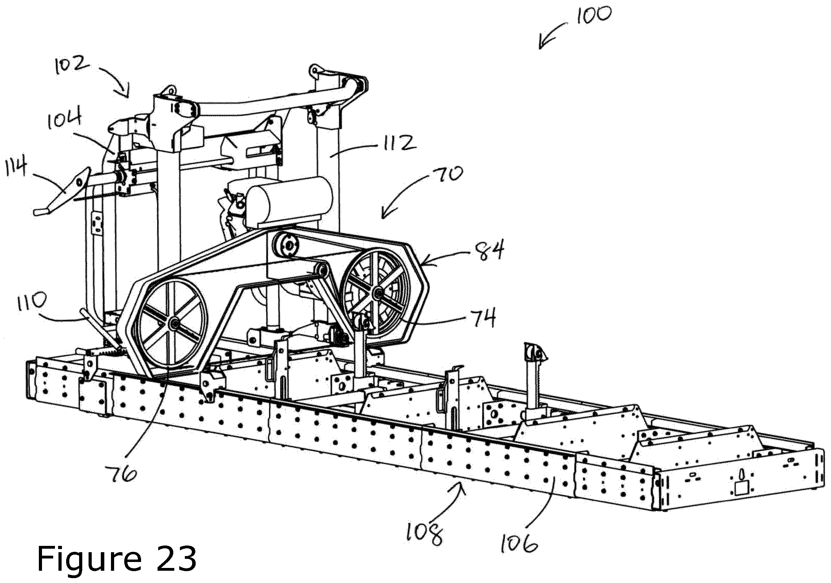

As seen in Figure 23 the sawmill has a sawhead 70, a log bed sawmill base 108 defining a first translation axis, a carriage 102 mounted to the bed for movement along the first translation axis. A second translation axis is orientated transverse to the first translation axis and a lateral axis is orientated transverse to each of the first translation axis and the second translation axis. Two or more elongate guide members 112 secure to the carriage for movement therewith along the first translation axis. The guide members 112 are orientated parallel to the second translation axis and being spaced apart from one another in the direction of the lateral axis.

Raising motor 72 relative to drive bandwheel 74 and free bandwheel 76 allows for a greater throat clearance (ΔY) between blade 82 and neck section 94 of guard 84. The greater throat clearance allows part of a log to fit between the bandwheels well above the center or axles of the bandwheels. This helps to allow blade 82 to make a "deeper" cut into the log situated on sawmill base 108. In other words, the larger throat clearance allows blade 82 to cut the log along a plane that is further from a top surface of the log, providing more cutting options than a conventional sawhead.

Thus the present invention provides a sawhead which ensures proper bandsaw tracking on bandwheels, by rigorously fixing the distance between each bandwheel, and the alignment of each bandwheel and the saw blade. The bandwheels remain absolutely fixed in their predetermined locations. Thus during high pressure operation, the sawhead structure is highly rigid to resist deflection and torsion.

It is to be understood that what has been described are the preferred embodiments of the invention, but they are not limited thereto, and variations falling within the scope of the claims are also encompassed.

## Claims

1. A support assembly (10) for retaining a motor (72) relative to a drive bandwheel (74) and a free bandwheel (76) in a sawmill (100), the support assembly comprising:
a first platform (12) orientated on a first plane, the first platform securable to a drive axle (78) of the drive bandwheel;
a second platform (14) orientated on a second plane, the second platform securable to a free axle (80) of the free bandwheel; and
a centre platform (16) coupled to, and between, the first and second platforms, the centre platform orientated on a third plane vertically spaced apart from the first and
second planes, the centre platform configured to support the motor above the axles of the drive bandwheel and the free bandwheel,
further comprising a pair of joints (18), one joint connecting the first platform with one end of the centre platform, and the other joint connecting the second platform with another end of the centre platform,
wherein the first, second, and centre platforms, and the pair of joints collectively comprise:
a first structural member (20);
a second structural member (22); and
spacer components (24) securing the first and second structural members together,
spaced apart from one another,
wherein each structural member comprises:
a first segment (26);
a second segment (28);
a centre segment (30) positioned between the first and second segments; and
a joint segment (32) connecting the first segment with one end of the centre segment, and another joint segment connecting the second segment with another end of the centre segment, the joint segments collectively forming the joints,
wherein the spacer components comprise:
a centre plate secured to, and extending between, the centre segments of the structural members, the centre plate and the centre segments forming the centre platform (16).

2. The support assembly of claim 1, wherein the first plane and the second plane are coplanar, and the third plane is parallel with the first and second planes.

3. The support assembly of claims 1 or 2, wherein the spacer components further comprise:
a first upper plate (38) secured to, and extending between, the first segments (26) of the structural members, the first upper plate and the first segments forming the first platform; and
a second upper plate (40) secured to, and extending between, the second segments (28) of the structural members, the second upper plate and the second segments forming the second platform.

4. The support assembly of claim 3, wherein
the first platform further comprises a first lower plate (44) secured to the first upper plate around the first segments of the structural members; and
the second platform further comprises a second lower plate (46) secured to the second upper plate around the second segments of the structural members.

5. The support assembly of claims 1 to 4, further comprising a brace (48) extending between each of the joint segments of the structural members.

6. The support assembly of any preceding claim, wherein the first structural member further comprises a drive axle aperture (34) positioned in the first segment for receiving the drive axle of the drive bandwheel therethrough, preferably
wherein the second structural member further comprises another drive axle aperture positioned in the first segment for receiving the drive axle of the drive bandwheel therethrough, and a free axle aperture (36) positioned in the second segment for receiving the free axle of the free bandwheel therethrough.

7. The support assembly of any preceding claim, wherein each structural member is cast as a single unit, preferably
wherein the structural members are U beams.

8. A sawhead (70) for use in a sawmill, the sawhead comprising:
the support assembly of any preceding claim;
a motor (72) supported by the centre platform of the support assembly;
a drive bandwheel (74) with a drive axle (78) secured to the first platform of the support assembly, the drive bandwheel operatively coupled to the motor;
a free bandwheel (76) with a free axle secured to the second platform of the support assembly, the free bandwheel operatively coupled to the drive bandwheel via a blade (82);
wherein elevation of the centre platform above the axles enlarges a throat distance (ΔY) between the blade and the centre platform, preferably
wherein the drive axle extends through a drive axle aperture (34) in the first and second structural members, and wherein the free axle extends through a free axle aperture (36) in the second structural member.

9. The sawhead of claim 8, further comprising a guard (84) secured between the support assembly and the drive bandwheel and the free bandwheel, the guard comprising:
a drive section (90) positioned adjacent the drive bandwheel,
a free section (92) positioned adjacent the free bandwheel, and
a neck section (94) connecting the drive section and the free section, the neck
section extending above the centre platform of the support assembly, preferably wherein the drive axle is secured to the drive section such that the drive bandwheel is fully contained within the drive section of the guard, and wherein the free axle is secured to the free section such that the free bandwheel is fully contained within the free section of the guard, preferably
wherein the first structural member of the support assembly is positioned adjacent the guard.

10. A kit for assembling a support assembly according to any of claims 1-9, and for use in a sawmill (100), the kit comprising:
a first structural member (20) and a second structural member (22), each structural member comprising:
a first segment (26) orientated on a first plane,
a second segment (28) orientated on a second plane,
a centre segment (30) orientated on a third plane that is vertically spaced apart from the first and second planes, and
a joint segment (32) connecting the first segment with one end of the centre segment, and another joint segment (32) connecting the second segment with another end of the centre segment; and
spacer components (24) for securing the first and second structural members together, spaced apart from one another,
wherein the spacer components comprise:
a centre plate (42) securable to and between the centre segments of the first and second structural members, preferably
wherein each structural member is cast as a single unit.

11. The kit of claim 10, wherein the first plane and the second plane are coplanar, and the third plane is parallel with the first and second planes.

12. The kit of claim 10 or 11, wherein the spacer components comprise:
a first upper plate (38) securable to and between the first segments of the first and second structural members; and
a second upper plate (40) securable to and between the second segments of the first and second structural members, preferably
wherein the spacer components comprise:
a first lower plate (44) securable to the first upper plate around the first segments of the first and second structural members; and
a second lower plate (46) securable to the second upper plate around the second segments of the structural members, preferably
further comprising a brace (48) securable between each of the joint segments of the first and second structural members.

13. A sawmill (100) comprising
the sawhead (70) of claim 8 or 9,
a log bed (108) defining a first translation axis,
a carriage (102) mounted to the bed for movement along the first translation axis; and defining a second translation axis and a lateral axis, the second translation axis being orientated transverse to the first translation axis and the lateral axis being orientated transverse to each of the first translation axis and the second translation axis,
two or more elongate guide members (112) secured to the carriage for movement therewith along the first translation axis, the guide members each being orientated parallel to the second translation axis and being spaced apart from one another in the direction of the lateral axis;
the sawhead comprising two or more guide receivers, each guide receiver being mounted to a respective one of the guide members.

## Patentansprüche

1. Unterstützbaugruppe (10) zum Festhalten eines Motors (72) relativ zu einem Antriebsbandrad (74) und einem freien Bandrad (76) in einem Sägewerk (100), wobei die Unterstützbaugruppe Folgendes aufweist:
eine erste Plattform (12), die auf einer ersten Ebene ausgerichtet ist, wobei die erste Plattform an einer Antriebsachse (78) des Antriebsbandrads fixierbar ist;
eine zweite Plattform (14), die auf einer zweiten Ebene ausgerichtet ist, wobei die zweite Plattform an einer freien Achse (80) des freien Bandrads fixierbar ist; und
eine Mittelplattform (16), die mit und zwischen der ersten und der zweiten Plattform (an)gekoppelt ist, wobei die Mittelplattform auf einer dritten Ebene ausgerichtet ist, die von der ersten und der zweiten Ebene vertikal beabstandet ist, wobei die Mittelplattform zum Stützen des Motors über den Achsen des Antriebsbandrads und des freien Bandrads konfiguriert ist,
wobei sie ferner ein Verbindungspaar (18) aufweist, wobei eine Verbindung die erste Plattform mit einem Ende der Mittelplattform verbindet und die weitere Verbindung die zweite Plattform mit einem weiteren Ende der Mittelplattform verbindet,
wobei die erste, die zweite und die Mittelplattform und das Verbindungspaar zusammen Folgendes aufweisen:
ein erstes Bauelement (20);
ein zweites Bauelement (22); und
Abstandshalterteile (24), die das erste und das zweite Bauelement voneinander beabstandet aneinander befestigen,
wobei jedes Bauelement Folgendes aufweist:
ein erstes Segment (26);
ein zweites Segment (28);
ein Mittelsegment (30), das zwischen dem ersten und dem zweiten Segment positioniert ist; und
ein Verbindungssegment (32), das das erste Segment mit einem Ende des Mittelsegments verbindet, und ein weiteres Verbindungssegment, das das zweite Segment mit einem weiteren Ende des Mittelsegments verbindet, wobei die Verbindungssegmente zusammen die Verbindungen bilden,
wobei die Abstandshalterteile Folgendes aufweisen:
eine Mittelplatte, die an bzw. sich zwischen den Mittelsegmenten der Bauelemente fixiert sind und sich erstrecken, wobei die Mittelplatte und die Mittelsegmente die Mittelplattform (16) bilden.

2. Unterstützbaugruppe nach Anspruch 1, wobei die erste Ebene und die zweite Ebene komplanar sind und die dritte Ebene mit der ersten und der zweiten Ebene parallel ist.

3. Unterstützbaugruppe nach Anspruch 1 oder 2, wobei die Abstandshalterteile ferner Folgendes aufweisen:
eine erste obere Platte (38), die an bzw. sich zwischen den ersten Segmenten (26) der Bauelemente fixiert ist und erstreckt, wobei die erste obere Platte und die ersten Segmente die erste Plattform bilden; und
eine zweite obere Platte (40), die an bzw. sich zwischen den zweiten Segmenten (28) der Bauelemente fixiert ist und erstreckt, wobei die zweite obere Platte und die zweiten Segmente die zweite Plattform bilden.

4. Unterstützbaugruppe nach Anspruch 3, wobei
die erste Plattform ferner eine erste untere Platte (44) aufweist, die um die ersten Segmente des Bauelements an der ersten oberen Platte fixiert ist; und
die zweite Plattform ferner eine zweite untere Platte (46) aufweist, die um die zweiten Segmente der Bauelemente an der zweiten oberen Platte fixiert ist.

5. Unterstützbaugruppe nach einem der Ansprüche 1 bis 4, die ferner eine Strebe (48) aufweist, die sich zwischen jedem der Verbindungssegmente der Bauelement erstreckt.

6. Unterstützbaugruppe nach einem der vorhergehenden Ansprüche, wobei das erste Bauelement ferner eine im ersten Segment positionierte Antriebsachsenöffnung (34) zum Aufnehmen der Antriebsachse des Antriebsbandrads durch sie hindurch aufweist, vorzugsweise
wobei das zweite Bauelement ferner eine weitere, im ersten Segment positionierte Antriebsachsenöffnung zum Aufnehmen der Antriebsachse des Antriebsbandrads durch sie hindurch und eine im zweiten Segment positionierte Freie-Achse-Öffnung (36) zum Aufnehmen der freien Achse des freien Bandrads durch sie hindurch aufweist.

7. Unterstützbaugruppe nach einem der vorhergehenden Ansprüche, wobei jedes Bauelement als einzelne Einheit gegossen ist, vorzugsweise
wobei die Bauelements U-Träger sind.

8. Sägekopf (70) zur Verwendung in einem Sägewerk, wobei der Sägekopf Folgendes aufweist:
die Unterstützbaugruppe nach einem der vorhergehenden Ansprüche;
einen Motor (72), der von der Mittelplattform der Unterstützbaugruppe getragen wird;
ein Antriebsbandrad (74) mit einer Antriebsachse (78), die an der ersten Plattform der Unterstützbaugruppe fixiert ist, wobei das Antriebsbandrad funktionell mit dem Motor gekoppelt ist;
ein freies Bandrad (76) mit einer freien Achse, die an der zweiten Plattform der Unterstützbaugruppe fixiert ist, wobei das freie Bandrad funktionell über ein Sägeblatt (82) mit dem Antriebsbandrad gekoppelt ist;
wobei die Erhöhung der Mittelplattform über die Achsen einen Verengungsabstand (ΔΥ) zwischen dem Sägeblatt und der mittleren Plattform vergrößert, vorzugsweise
wobei sich die Antriebsachse vorzugsweise durch eine Antriebsachsenöffnung (34) im ersten und im zweiten Bauelement erstreckt und wobei sich die freie Achse durch eine Freie-Achse-Öffnung (36) im zweiten Bauelement erstreckt.

9. Sägekopf nach Anspruch 8, der ferner eine Schutzvorrichtung (84) aufweist, die zwischen der Unterstützanordnung und dem Antriebsbandrad und dem freien Bandrad fixiert ist, wobei die Schutzvorrichtung Folgendes aufweist:
einen Antriebsabschnitt (90), der an das Antriebsbandrad angrenzend positioniert ist,
einen freien Abschnitt (92) der an das freie Bandrad angrenzend positioniert ist, und
einen Verengungsabschnitt (94), der den Antriebsabschnitt und den freien Abschnitt verbindet, wobei der Verengungsabschnitt sich über der Mittelplattform der Unterstützbaugruppe erstreckt, vorzugsweise
wobei die Antriebsachse so am Antriebsabschnitt fixiert ist, dass das Antriebsbandrad vollständig im Antriebsabschnitt der Schutzvorrichtung aufgenommen ist und wobei die freie Achse so am freien Abschnitt fixiert ist, dass das freie Bandrad vollständig im freien Abschnitt der Schutzvorrichtung aufgenommen ist, vorzugsweise
wobei das erste Bauelement der Unterstützbaugruppe an die Schutzvorrichtung angrenzend positioniert ist.

10. Satz für die Montage einer Unterstützbaugruppe nach einem der Ansprüche 1 bis 9, und zur Verwendung in einem Sägewerk (100), wobei der Satz Folgendes aufweist:
ein erstes Bauelement (20) und ein zweites Bauelement (22), wobei jedes Bauelement Folgendes aufweist:
ein erstes Segment (26), das auf einer ersten Ebene ausgerichtet ist,
ein zweites Segment (28), das auf einer zweiten Ebene ausgerichtet ist,
ein Mittelsegment (30), das auf einer dritten Ebene ausgerichtet ist, die von der ersten und der zweiten Ebene vertikal beabstandet ist, und
ein Verbindungssegment (32), das das erste Segment mit einem Ende des Mittelsegments verbindet, und ein weiteres Verbindungssegment (32), das das zweite Segment mit einem weiteren Ende des Mittelsegments verbindet; und
Abstandshalterteile (24) zum Befestigen des ersten und des zweiten Bauelements voneinander beabstandet aneinander,
wobei die Abstandshalterteile Folgendes aufweisen:
eine Mittelplatte (42), die an und zwischen den Mittelsegmenten des ersten und des zweiten Bauelements fixierbar ist, vorzugsweise
wobei jedes Bauelement als einzelne Einheit gegossen ist.

11. Satz nach Anspruch 10, wobei die erste Ebene und die zweite Ebene komplanar sind und die dritte Ebene mit der ersten und der zweiten Ebene parallel ist.

12. Satz nach Anspruch 10 oder 11, wobei die Abstandshalterteile Folgendes aufweisen:
eine erste obere Platte (38), die an und zwischen den ersten Segmenten des ersten und des zweiten Bauelements fixierbar ist; und
eine zweite obere Platte (40), die an und zwischen den zweiten Segmenten des ersten und des zweiten Bauelements fixierbar ist, vorzugsweise
wobei die Abstandshalterteile Folgendes aufweisen:
eine erste untere Platte (44), die um die ersten Segmente des ersten und des zweiten Bauelements an der ersten oberen Platte fixierbar ist; und
eine zweite untere Platte (46), die um die zweiten Segmente der Bauelemente an der zweiten oberen Platte fixierbar ist, vorzugsweise
ferner eine Strebe (48) aufweisend, die zwischen jedem der Verbindungssegmente des ersten und des zweiten Bauelements fixierbar ist.

13. Sägewerk (100), das Folgendes aufweist:
den Sägekopf (70) nach Anspruch 8 oder 9,
ein Stammbett (108), das eine erste Verschiebungsachse definiert,
einen an dem Bett montierten Schlitten (102) zur Bewegung an der ersten Verschiebungsachse entlang; und eine zweite Verschiebungsachse und eine Querachse definierend, wobei die zweite Verschiebungsachse quer zur ersten Verschiebungsachse ausgerichtet ist und die Querachse quer zu jeder von der ersten Verschiebungsachse und der zweiten Verschiebungsachse ausgerichtet ist,
zwei oder mehr langgestreckte Führungselemente (112), die am Schlitten fixiert sind zur Bewegung damit entlang der ersten Verschiebungsachse, wobei die Führungselemente jeweils parallel zur zweiten Verschiebungsachse ausgerichtet sind und in der Richtung der Querachse voneinander beabstandet sind;
wobei der Sägekopf zwei oder mehr Führungsaufnahmen aufweist, wobei jede Führungsaufnahme an einem jeweiligen der Führungselemente montiert ist.

## Revendications

1. Ensemble de support (10) pour retenir un moteur (72) par rapport à un volant de scie d'entraînement (74) et un volant de scie libre (76) dans une scierie (100), l'ensemble de support comprenant:
une première plate-forme (12) orientée sur un premier plan, la première plate-forme pouvant être fixée à un essieu de commande (78) du volant de scie d'entraînement;
une deuxième plate-forme (14) orientée sur un deuxième plan, la deuxième plate-forme pouvant être fixée à un essieu libre (80) du volant de scie libre, et
une plate-forme centrale (16) couplée aux et entre la première et la deuxième plate-forme, la plate-forme centrale étant orientée sur un troisième plan verticalement espacé du premier et du deuxième plan, la plate-forme centrale étant configurée pour soutenir le moteur au-dessus des essieux du volant de scie d'entraînement et du volant de scie libre,
comprenant en outre une paire de j oints (18), un joint raccordant la première plate-forme à une extrémité de la plate-forme centrale, et l'autre joint raccordant la deuxième plate-forme à une autre extrémité de la plate-forme centrale,
dans lequel la première, la deuxième plate-forme et la plate-forme centrale et la paire de joints comprennent collectivement:
un premier membre structurel (20);
un deuxième membre structurel (22); et
des composants d'espacement (24) fixant ensemble le premier et le deuxième membre structurel, espacés l'un de l'autre,
dans lequel chaque membre structurel comprend:
un premier segment (26);
un deuxième segment (28);
un segment central (30) positionné entre le premier et le deuxième segment; et
un segment de joint (32) raccordant le premier segment à une extrémité du segment central, et un autre segment de joint raccordant le deuxième segment à une autre extrémité du segment central, les segments de joint formant collectivement les j oints,
dans lequel les composants d'espacement comprennent:
une plaque centrale fixée à et s'étendant entre les segments centraux des membres structurels, la plaque centrale et les segments centraux formant la plate-forme centrale (16).

2. Ensemble de support selon la revendication 1, dans lequel le premier plan et le deuxième plan sont coplanaires, et le troisième plan est parallèle aux premier et deuxième plans.

3. Ensemble de support selon les revendications 1 ou 2, dans lequel les composants d'espacement comprennent en outre:
une première plaque supérieure (38) fixée à et s'étendant entre les premiers segments (26) des membres structurels, la première plaque supérieure et les premiers segments formant la première plate-forme; et
une deuxième plaque supérieure (40) fixée à et s'étendant entre les deuxièmes segments (28) des membres structurels, la deuxième plaque supérieure et les deuxièmes segments formant la deuxième plate-forme.

4. Ensemble de support selon la revendication 3, dans lequel
la première plate-forme comprend en outre une première plaque inférieure (44) fixée à la première plaque supérieure autour des premiers segments des membres structurels, et
la deuxième plate-forme comprend en outre une deuxième plaque inférieure (46) fixée à la deuxième plaque supérieure autour des deuxièmes segments des membres structurels.

5. Ensemble de support selon les revendications 1 à 4, comprenant en outre une entretoise (48) s'étendant entre chacun des segments de joint des membres structurels.

6. Ensemble de support selon l'une quelconque des revendications précédentes, dans lequel le premier membre structurel comprend en outre une ouverture d'essieu de commande (34) positionnée dans le premier segment pour recevoir l'essieu de commande du volant de scie d'entraînement à travers, de préférence
dans lequel le deuxième membre structurel comprend en outre une autre ouverture d'essieu de commande positionnée dans le premier segment pour recevoir l'essieu de commande du volant de scie d'entraînement à travers, et une ouverture d'essieu libre (36) positionnée dans le deuxième segment pour recevoir l'essieu libre du volant de scie libre à travers.

7. Ensemble de support selon l'une quelconque des revendications précédentes, dans lequel chaque membre structurel est coulé comme une seule unité, de préférence
dans lequel les membres structurels sont des poutres en U.

8. Tête de scie (70) pour utilisation dans une scierie, la tête de scie comprenant:
l'ensemble de support selon l'une quelconque des revendications précédentes,
un moteur (72) soutenu par la plate-forme centrale de l'ensemble de support,
un volant de scie d'entraînement (74) avec un essieu de commande (78) fixé à la première plate-forme de l'ensemble de support, le volant de scie d'entraînement étant couplé de manière opérationnelle au moteur;
un volant de scie libre (76) avec un essieu libre fixé à la deuxième plate-forme de l'ensemble de support, le volant de scie libre étant couplé de manière opérationnelle au volant de scie d'entraînement via une lame (82);
dans laquelle l'élévation de la plate-forme centrale au-dessus des essieux élargit le dégagement de la gorge (ΔY) entre la lame et la plate-forme centrale, de préférence
dans laquelle l'essieu de commande s'étend à travers l'ouverture d'essieu de commande (34) dans le premier et le deuxième membre structurel, et dans lequel l'essieu libre s'étend à travers l'ouverture d'essieu libre (36) dans le deuxième membre structurel.

9. Tête de scie selon la revendication 8, comprenant en outre une garde (84) fixée entre l'ensemble de support et le volant de scie d'entraînement et le volant de scie libre, la garde comprenant:
une section d'entraînement (90) positionnée adjacente au volant de scie d'entraînement,
une section libre (92) positionnée adjacente au volant de scie libre, et
une section de col (94) raccordant la section d'entraînement et la section libre, la section de col s'étendant au-dessus de la plate-forme centrale de l'ensemble de support, de préférence
dans laquelle l'essieu de commande est fixé à la section d'entraînement de sorte que le volant de scie d'entraînement est totalement contenu dans la section d'entraînement de la garde, et dans laquelle l'essieu libre est fixé à la section libre de sorte que le volant de scie libre est totalement contenu dans la section libre de la garde, de préférence
dans laquelle le premier membre structurel de l'ensemble de support est positionné adjacent à la garde.

10. Kit d'assemblage d'un ensemble de support selon l'une quelconque des revendications 1-9, et pour utilisation dans une scierie (100), le kit comprenant:
un premier membre structurel (20) et un deuxième membre structurel (22), chaque membre structurel comprenant:
un premier segment (26) orienté sur un premier plan,
un deuxième segment (28) orienté sur un deuxième plan,
un segment central (30) orienté sur un troisième plan qui est verticalement espacé du premier et du deuxième plan, et
un segment de joint (32) raccordant le premier segment à une extrémité du segment central, et un autre segment de joint (32) raccordant le deuxième segment à une autre extrémité du segment central, et
des composants d'espacement (24) pour fixer ensemble le premier et le deuxième membre structurel, espacés l'un de l'autre,
dans lequel les composants d'espacement comprennent:
une plaque centrale (42) pouvant être fixée aux et entre les segments centraux du premier et du deuxième membre structurel, de préférence
dans lequel chaque membre structurel est coulé comme une seule unité.

11. Kit selon la revendication 10, dans lequel le premier plan et le deuxième plan sont coplanaires, et le troisième plan est parallèle au premier et au deuxième plan.

12. Kit selon la revendication 10 ou 11, dans lequel les composants d'espacement comprennent:
une première plaque supérieure (38) pouvant être fixée aux et entre les premiers segments du premier et du deuxième membre structurel, et
une deuxième plaque supérieure (40) pouvant être fixée aux et entre les deuxièmes segments du premier et du deuxième membre structurel, de préférence
dans lequel les composants d'espacement comprennent:
une première plaque inférieure (44) pouvant être fixée à la première plaque supérieure autour des premiers segments du premier et du deuxième membre structurel, et
une deuxième plaque inférieure (46) pouvant être fixée à la deuxième plaque supérieure autour des deuxièmes segments des membres structurels, de préférence
comprenant en outre une entretoise (48) pouvant être fixée entre chacun des segments de joint du premier et du deuxième membre structurel.

13. Scierie (100) comprenant:
la tête de scie (70) selon la revendication 8 ou 9,
un banc pour tronçon de bois (108) définissant un premier axe de translation,
un chariot (102) monté sur le banc pour mouvement le long du premier axe de translation, et définissant un deuxième axe de translation et un axe latéral, le deuxième axe de translation étant orienté transversalement au premier axe de translation et l'axe latéral étant orienté transversalement à chacun du premier axe de translation et du deuxième axe de translation,
deux membres de guide allongés ou plus (112) fixés au chariot pour mouvement avec celui-ci le long du premier axe de translation, les membres de guide étant orientés chacun parallèles au deuxième axe de translation et étant espacés l'un de l'autre dans la direction de l'axe latéral;
scierie comprenant deux logements de guide ou plus, chaque logement de guide étant monté sur un membre respectif des membres de guide.
